(19) **Europäisches Patentamt European Patent Office Office européen des brevets**

(11) **EP 3 896 199 B1**

(12) **EUROPEAN PATENT SPECIFICATION**

(45) Date of publication and mention of the grant of the patent:
**06.03.2024 Bulletin 2024/10**

(21) Application number: **20763533.5**

(22) Date of filing: **21.02.2020**

(51) International Patent Classification (IPC):
**D01F 8/14** *(2006.01)*    **B01D 39/08** *(2006.01)*
**D01D 5/34** *(2006.01)*

(52) Cooperative Patent Classification (CPC):
**D01D 5/34; B01D 39/083; D01F 8/14;**
B01D 2239/0233; B01D 2239/0457; B01D 2239/10;
B01D 2239/1233

(86) International application number:
**PCT/JP2020/007052**

(87) International publication number:
**WO 2020/175370 (03.09.2020 Gazette 2020/36)**

(54) **CORE-SHEATH COMPOSITE POLYESTER MONOFILAMENT FOR SUPERFINE HIGH-MESH FILTER**

KERN-MANTEL-VERBUNDSTOFF-POLYESTERMONOFILAMENT FÜR SUPERFEINEN FILTER MIT HOHEM NETZANTEIL

MONOFILAMENT DE POLYESTER COMPOSITE À ÂME-GAINE POUR FILTRE À MAILLE ÉLEVÉE SUPERFIN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.02.2019   JP 2019031734**

(43) Date of publication of application:
**20.10.2021   Bulletin 2021/42**

(73) Proprietor: **Toray Industries, Inc.**
**Tokyo 103-8666 (JP)**

(72) Inventors:
• **SASAGAWA, Hisashi**
  **Shizuoka 411-8652 (JP)**
• **KOSAKA, Shunsuke**
  **Shizuoka 411-8652 (JP)**
• **ICHIKAWA, Tomoyuki**
  **Shizuoka 411-8652 (JP)**

(74) Representative: **Prüfer & Partner mbB**
**Patentanwälte · Rechtsanwälte**
**Sohnckestraße 12**
**81479 München (DE)**

(56) References cited:
EP-A1- 1 115 924      EP-A1- 1 793 022
EP-B1- 1 115 924      WO-A1-2010/035640
JP-A- 2009 005 911    JP-A- 2012 117 196
JP-A- 2017 066 560

**Description**

TECHNICAL FIELD

The present invention relates to a core-sheath type high strength composite polyester monofilament for superfine high-mesh filters. More specifically, it relates to a monofilament suitable for achieving a high mesh feature to realize a high level balance between filtering performance and permeation performance as required in acoustic filters, fuel filters and so on.

BACKGROUND ART

Plain gauze fabrics produced by weaving monofilaments are in wide use in mesh cloth for screen printing applied to the production of print circuit boards in electronics fields that are rapidly growing in recent years and also in molded filters used for the production of automobiles, home electric appliances, etc. Specific examples of applications of plain gauze fabrics produced by weaving monofilaments include, for example, screen printing for T-shirts, banners, signboards, vending machine plates, car panels, outdoor/indoor signs, ballpoint pens, various cards, nameplates, scratch cards, braille tablets, CDs/DVDs, printed circuit boards, plasma displays, and liquid crystal displays. Their applications to filters include lint filters to prevent reattachment of dust in washing water, filters fitted in air conditioners to remove dirt and dust in rooms, and molded filters fitted in vacuum cleaners to remove dirt, dust, and trash. In the medical field, in particular, they include filters fitted in blood transfusion kits and artificial dialysis lines to remove air bubbles, and in the automobile manufacturing field, such filters are used in fuel pumps and fuel injection devices mounted in fuel channels, as well as in ABSs, brakes, transmissions, and power steering machines, and they also play an important role in sideslip prevention systems and hydraulic systems such as WT, which is a latest mechanism for mileage improvement and output enhancement, in preventing dust and foreign objects from entering into electromagnetic valves and performing filtration for cleaning them.

Among others, demands for superfine filters are increasing in recent years in the rapidly growing electronics and automobile industries. In the case of acoustic filters, small ones are now in wider use as smaller type portable terminals become more popular, and a high level balance between dust prevention performance and acoustic transmission performance is called for. There are increasing demands for filters that have smaller thread diameters and high mesh counts while maintaining high filter opening uniformity. To this end, it is necessary to use a monofilament that has an increased fineness while maintaining a high strength, high modulus, and a high length-directional fiber diameter uniformity. In the automobile industry, it is considered important to realize performance improvement in pursuing environment load reduction, and it is now required to develop fuel filters that are high in both particle collection performance and pressure loss reduction.

In order to produce a superfine acoustic filter or fuel filter, it is necessary to use a monofilament that is high in both fineness and fiber diameter uniformity and has a higher residual elongation percentage as compared to common gauze for screen printing. A monofilament for filters should be designed to have a higher residual elongation percentage as compared to monofilaments for screen gauze in order to provide durable and processable filters. In order to produce a filter having improved sound transmission performance, filtration performance, dust prevention performance, etc., furthermore, it is necessary to use monofilaments with small fiber diameters and the use of fine monofilaments serves to produce a woven fabric with an increased opening ratio and also serves to widen the variation of the weaving method. Regarding the production of a fine monofilament, Patent document 1 proposes a method for producing a monofilament for screen gauze, which is designed to prepare a core-sheath type composite material and produce a fine polyester monofilament with a fineness as small as 3 dtex under optimized equipment conditions to realize a single step procedure. In addition, Patent document 2 proposes a method designed to decrease the frequency of thread breakage during fine yarn formation by decreasing the viscosity unevenness that is attributed to differences in heat history of the polymer during passage through the melt-spinning pack. As an example of the production of a monofilament for industrial material filters, Patent document 3 proposes a method to develop a material with improved heat resistance and chemical resistance by using a polyethylene naphthalate polymer. Patent document 4 describes a sheath-core type conjugated polyester monofilament satisfying the following conditions: before wet heat treatment, the largest point strength is 5.5 to 8.0 cN/dtex, the strength at 5% elongation is 3.5 to 5.0 cN/dtex, the largest point elongation is 20 to 35%, and the wet heat shrinkage percent is 2.5 to 9.0%; after wet heat treatment, the largest point strength is 5.0 to 7.5 cN/dtex, the strength at 15% elongation is 4.0 to 7.0 cN/dtex, and the largest point elongation is 20 to 40%; an intrinsic viscosity of a core side polyester is 0.70 to 1.00 dL/g; an intrinsic viscosity of a sheath side polyester is 0.40 to 0.55 dL/g; and the number of knotted filaments is within a certain range.

PRIOR ART DOCUMENTS

PATENT DOCUMENTS

    Patent document 1: Japanese Unexamined Patent Publication (Kokai) No. 2010-180484
    Patent document 2: Japanese Unexamined Patent Publication (Kokai) No. 2017-66560
    Patent document 3: Japanese Unexamined Patent Publication (Kokai) No. 2011-1657
    Patent document 4: JP 2012 117196 A

SUMMARY OF INVENTION

PROBLEMS TO BE SOLVED BY THE INVENTION

The main object of the present invention is to provide a high-mesh plain gauze fabric with uniform opening for superfine high-mesh filters and also provide a monofilament having a very small and uniform fiber diameter. To produce a fine monofilament for superfine filters having a higher residual elongation percentage as compared to monofilaments for screen gauze, it is necessary to use a lower draw ratio as compared to the production of monofilaments for screen gauze. To realize a high fineness, the monofilament to be used should have a core-sheath type composite structure with a high wear resistance, and accordingly, the discharge rate of each component should be lower than for the production of single component filaments. As the polymer discharge rate is decreased accordingly to an unprecedented level, the polymer tends to be retained in some portions of the spinning pack, and such a partial viscosity decrease causes noticeable inclined jetting (twitching). Such twitching causes local fluctuations in fiber diameter, and consequently, a woven fabric produced from this monofilament will suffer a variation in opening size in the portions where twitching occurred, leading to unevenness over the entire woven fabric. Thus, it is necessary to prevent twitching because this unevenness leads to a final product having a deteriorated appearance quality and a decreased filter performance.

MEANS OF SOLVING THE PROBLEMS

The present invention relates to a core-sheath type composite polyester monofilament for superfine high-mesh filters characterized by meeting the requirements A to D specified blow:

    A. The frequency of fiber diameter fluctuations of 1.0 $\mu$m or more in the fiber diameter direction is 1.0 or less in every 1,000,000 m in the fiber length direction of the monofilament.
    B. The monofilament has a fineness of 3.0 to 6.0 dtex.
    C. The monofilament has a residual elongation percentage of 30% to 45%.
    D. The monofilament has a core-to-sheath cross-sectional area ratio in the range of 60:40 to 95:5 (core:sheath).

ADVANTAGEOUS EFFECTS OF THE INVENTION

The present invention provides a monofilament having a very small and uniform fiber diameter that can serve to produce a fabric for superfine high-mesh filters with uniform openings.

BRIEF DESCRIPTION OF THE DRAWINGS

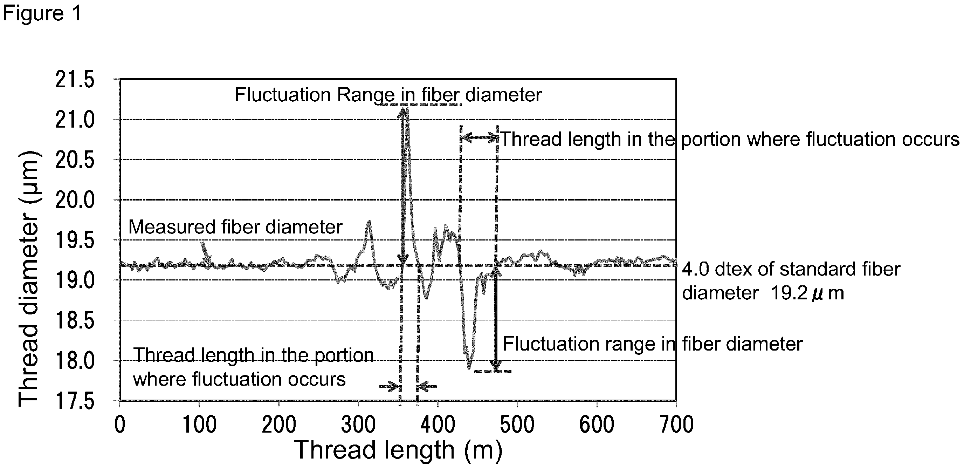

[Fig. 1] This is for describing features of fiber diameter fluctuations that characterize the present invention.

DESCRIPTION OF PREFERRED EMBODIMENTS

The filament according to the present invention is described in detail below.
The monofilament according to the present invention is used for superfine high-mesh filters. For example, the filter fitted to the small speaker in a smartphone is intended to prevent dust from being attached to the speaker, but since the speaker is very small, the aperture ratio will decrease, leading to muffling of sound, if the filter is made of thick threads. On the other hand, if the mesh aperture ratio is increased by increasing the mesh interspace in order to prevent the muffling of sound, dust will enter the speaker to cause a failure. Under such circumstances, there is a call for a superfine high-mesh filter having both sound and pressure transmission performance and dust prevention performance, and there are demands for a woven fabric with a high mesh of 196 filaments/cm or more while maintaining a large mesh aperture ratio. When producing such a high-mesh woven fabric, however, the mesh interspace is so small that even slight fiber diameter fluctuations can cause collapse of the mesh. Furthermore, since the portion to which the mesh is attached is so small that the occupancy ratio of one mesh aperture is relatively large as compared with the size of the portion covered by the mesh, and accordingly, the filter performance can greatly deteriorate if only one mesh aperture is closed. Therefore, it is important for the monofilament for superfine high-mesh filter according to the present invention to have a very small and uniform fiber diameter, and the frequency of fiber diameter fluctuations of 1.0 μm or more in the fiber diameter direction is 1.0 or less in every 1,000,000 m in the fiber length direction of the monofilament. In order to suppress the variation in mesh interspace, the frequency of the fluctuations is preferably 0.8 or less in every 1,000,000 m, more preferably 0.5 or less in every 1,000,000 m.

Here, the specific form of fiber diameter fluctuations can be expressed by the following equation.

Fluctuation range (μm) in fiber diameter / thread length (m) in the portion where fluctuation occurs = 0.004 to 0.250

Quick fiber diameter fluctuations such as seen in Fig. 1 are attributed to inclined jetting (twitching). A good method to suppress twitching is to decrease the portions where polymer retention occurs in the pack. Since the polymer discharge rate is decreased to an unprecedented level during the production of the monofilament according to the present invention, the occurrence of twitching can be suppressed by preventing the retention of the polymer coming out of the filtering layer, in addition to performing conventional retention prevention methods. For example, the polymer supplied to the pack is sent to a filtering layer that consists mainly of fine sand and a filter to remove impurities, passed through a porous plate, stored temporarily in a polymer reservoir, and then introduced to a spinneret. Here, the twitching can be prevented if the difference between the diameter of the polymer reservoir and the arrangement diameter of the porous plate outlet is designed to be less than 2 mm. Regarding this mechanism, it is inferred that the elimination of the tendency for tiny lumps of the polymer to be retained along the edge of the polymer reservoir serves to prevent the inclination (twitching) during discharge, which is attributed to momentary increases in the linear discharge rate, from being caused by such tiny lumps of the polymer having a decreased melt viscosity due to the retention.

The monofilament according to the present invention has a monofilament fineness of 3.0 to 6.0 dtex in order to serve for the production of a high-mesh woven fabric that has a 196 filaments/cm or more while remaining a large mesh aperture ratio. Since thinner threads serve more effectively for decreasing the loss in sound and pressure, it is preferable to have a fineness of 3.0 to 5.0 dtex, more preferably, 3.0 to 4.0 dtex. The monofilament according to the present invention has a residual elongation percentage 30 to 45% in order to serve for the production of durable and processable filters. From the viewpoint of yarn-making stability, the residual elongation percentage is more preferably 30 to 42%, still more preferably 30 to 40%.

The monofilament according to the present invention is a core-sheath type composite polyester monofilament containing a core covered by a sheath in such a manner that the core is not exposed at the surface. The core-sheath ratio (core : sheath) is in the range of 60:40 to 95:5 in order to ensure both a scum reduction effect during high-mesh weaving and strength improvement by the core. It is more preferably in the range of 70:30 to 90:10. The core-sheath ratio defined here for the present invention is determined on the basis of the cross-sectional areas of the two polyester components present in the polyester monofilament measured in a cross-sectional photograph of the polyester monofilament.

The polyester to be used for the present invention is described below.

Here, from the viewpoint of ensuring high scum resistance, it is preferable that the polyester component used for forming the sheath in the polyester monofilament according to the present invention have an intrinsic viscosity lower than the intrinsic viscosity of the core polyester component and that the difference in intrinsic viscosity be 0.20 to 0.45. If the difference in intrinsic viscosity is 0.20 or more, it serves to control the degree of orientation and the degree of crystallinity of the sheath polyester component, i.e., the surface of the polyester monofilament, to low levels, which serves to achieve high scum resistance. Furthermore, since the sheath bears the shear stress on the inner wall surfaces of the discharge holes of the spinneret used for melt spinning, the shearing force caused on the core is small. Accordingly, the core can be spun in a uniform state with a low degree of molecular chain orientation to enable the production of a final polyester monofilament having high strength. To allow the polyester monofilament to have high strength, on the other hand, the sheath is also required to have an appropriate degree of orientation and therefore, a sufficient raw yarn strength cannot be achieved if the difference in intrinsic viscosity is larger than 0.45. The difference in intrinsic viscosity between the polyester components is more preferably 0.20 to 0.40.

Regarding the polyester materials used for the present invention, it is preferable that the core polyester component have an intrinsic viscosity in the range of 0.70 to 0.85. If the intrinsic viscosity is 0.70 or more, it will be possible to produce a polyester monofilament having sufficient strength and residual elongation percentage. It is more preferable for the core to have an intrinsic viscosity of 0.75 or more. The upper limit of the intrinsic viscosity is preferably 0.85 or less from the viewpoint of the ease of molding such as melt extrusion. Furthermore, the intrinsic viscosity of the core is more preferably 0.80 or less in consideration of the production cost and the influence of the decrease in molecular weight due to molecular chain breakage that may be caused by the heat and shearing force during the process.

More stable yarn making property can be ensured if the sheath has an intrinsic viscosity of 0.40 or more. It is preferable for the sheath to have an intrinsic viscosity of 0.45 or more. On the other hand, in order to achieve high wear resistance, i.e. scum resistance, it is preferable for the sheath to have an intrinsic viscosity of 0.55 or less.

Here, a polyester material containing polyethylene terephthalate (hereinafter referred to as PET) as the main component is used as the polyester of the polyester monofilament according to the present invention. The PET used for the present invention may be a polyester containing terephthalic acid as main acid component and ethylene glycol as main glycol component, wherein 90 mol% or more is accounted for by the repeating unit of ethylene terephthalate. Here, it may contain a copolymerization component capable of forming another ester bond as long as it accounts for less than 10 mol%. To give typical such copolymerization components, examples of acidic components include, but not limited to, bifunctional aromatic carboxylic acids such as isophthalic acid, phthalic acid, dibromoterephthalic acid, naphthalenedicarboxylic acid, and octoethoxybenzoic acid; bifunctional aliphatic carboxylic acids such as sebacic acid, oxalic acid, adipic acid, and dimer acid; and dicarboxylic acids such as cyclohexane dicarboxylic acid; whereas examples of glycol components include ethylene glycol, diethylene glycol, propanediol, butanediol, neopentyl glycol, bisphenol A, cyclohexanedimethanol, polyethylene glycol, polypropylene glycol, and other polyoxyalkylene glycols.

In addition, titanium dioxide (as matting agent), fine particles of silica or alumina (as lubricant), hindered phenol derivatives (as antioxidants), and other additives such as flame retardant, antistatic agent, ultraviolet absorber, and coloring pigment may be added to the PET as required.

Furthermore, since the PET component in the core bears the main role in maintaining the strength of the polyester monofilament, it is preferable for the inorganic particle additives such as titanium oxide that are usually added to polyester fibers to account for less than 0.6 wt%. On the other hand, since the PET component in the sheath bears the main role in maintaining the abrasion resistance of the polyester monofilament, it preferably contains about 0.1 wt% to 0.6 wt% of inorganic particles such as of titanium oxide.

Physical properties of the polyester monofilament according to the present invention are described below.

It preferably has a strength of 5.0 to 6.0 cN/dtex in order to prevent a decrease in weavability and a decrease in dimensional stability during use as a filter material. If it has a strength of 5.0 or more, the filter can maintain high strength while suffering little filament slippage, thereby realizing high filtering performance and high resistance to filter breakage. If its strength is 6.0 cN/dtex or less, the scraping caused by the reed during high-mesh weaving can be prevented. The strength is more preferably 5.2 to 5.8 cN/dtex.

In order to realize required dimensional stability, the strength at 5% elongation is preferably 2.7 to 3.8 cN/dtex. If it has a strength of 2.7 cN/dtex or more, the filter can maintain high dimensional stability while suffering little filament slippage, thereby realizing high filtering performance and resistance to partial clogging. If its strength is 3.8 cN/dtex or less, the scraping caused by the reed during weaving can be prevented. The strength at 5% elongation is preferably 2.8 to 3.5 cN/dtex.

The rate of fiber shrinkage in boiling water (boiling water shrinkage rate) is preferably 7.0 to 10.0% because dimensional stabilization by heat setting and adjustment of the mesh interspace are to be performed after weaving. If it is 7.0% or more, it serves to ensure an appropriate degree of shrinkage and a desired mesh interspace. If it is 10.0% or less, on the other hand, it serves to ensure high dimensional stability during weaving. The boiling water shrinkage rate is more preferably 7.5% to 9.5%.

Next, a preferred method for producing the polyester monofilament according to the present invention is described below.

For the present invention, in order to suppress the occurrence of viscosity unevenness attributed to the difference in heat history received by the molten polymer streams as they move to the filter layer portion in the pack, it may be good to use a melt spinning pack having a perforated plate designed so that polymer streams having different heat histories are discharged from mutually adjacent outlet holes and disposed in the polymer outlet face of the plate, thereby allowing the discharged polymer streams to be mixed uniformly as they move from the polymer reservoir to the inlet port of the spinneret. The melt spinning pack to be used is composed mainly of a filter layer, a filter, a perforated plate, and a spinneret that are arranged in this order. The perforated plate has multiple through-holes that allow polymer streams to pass through, and the through-holes in the polymer inlet face are disposed along the circumferences of n ($n \geq 2$) concentric circles A1, A2, A3, ..., An, with the circles being concentric around the center of the inlet face and with each circumference containing a plurality of through-holes, whereas in the polymer outlet face, through-holes are disposed along the circumferences of m ($m \geq 1$) concentric circles B1, B2, B3, ..., $B_m$, with the circles being concentric around the center of the outlet face and with each circumference containing a plurality of through holes, wherein mutually adjacent through-holes disposed on one circle in the polymer outlet face come from different circles in the polymer inlet face. After passing through the through-holes, the polymer streams are discharged into a polymer reservoir disposed immediately below the perforated plate and then sent to the spinneret. Thus, polymer streams are forced to flow from different circles in the inlet face to mutually adjacent outlet holes disposed along one circle in the outlet face and then they are combined in the polymer reservoir and introduced into the spinneret. In this way, the molten polymer streams are mixed forcedly to reduce the viscosity unevenness attributed to differences in heat history. To further increase the degree of mixing, it is preferable that the number of concentric circle (n) in the inlet face of the perforated plate and the number of concentric circle (m) in the outlet face have the relation n > m and it is more preferable that the concentric circle (m) in the outlet face be one.

The monofilament according to the present invention, which has the aforementioned physical characteristics, can be developed as the monofilament prepared by melt-spinning the aforementioned polyester using the aforementioned melt-spinning pack and a generally known spinneret is drawn subsequently. When the spinning step is immediately followed by a drawing step, the spinning speed is preferably 700 to 1,200 m/min and the draw ratio is preferably 3.4 to 4.6. Spinning at such a low speed and subsequent drawing to such a high ratio serve to produce a fiber having a desired strength. Before the drawing step, it is preferable to perform preheating at a temperature that is not lower than the glass transition point of the undrawn thread and not higher than the temperature calculated as (crystallization onset temperature - 20°C). For the present invention, the preheating is preferably in the range of 80°C to 110°C. The heat setting temperature in the drawing step is preferably not higher than the melting point of the monofilament, and for the present invention, it is preferably in the range of 120°C to 180°C. Although it is possible to wind the yarn as an undrawn yarn in the spinning step and then subject it to the drawing step, it is preferable to directly connect the drawing step to the spinning step.

EXAMPLES

This invention is explained below more specifically with reference to examples. The methods described below were used in the examples to measure the frequency of fluctuation in the fiber diameter of the monofilament, fineness, residual elongation percentage, strength, strength at 5% elongation, boiling water shrinkage rate, intrinsic viscosity of polyester, and number of weft threads of the mesh.

A. Frequency of fluctuation in the fiber diameter of the monofilament

(1) Twenty-four (24) packages were placed on a creel.
(2) The threads were unwound at a speed of 750 m/min and allowed to pass through an optical inspection device (PSD-200, manufactured by Sensoptic).
(3) The thread diameter was measured at intervals of 2.66 m along the thread. Measurements were taken over a period of 20 minutes.
(4) After the completion of the measurement step, the 24 packages on the creel were replaced with another 24 packages.
(5) The steps from (2) to (4) were repeated 32 times. The total thread length measured was 7,680,000 m.
(6) From the measurement results, the number of occurrences of fiber diameter fluctuations of 1.0 $\mu$m or more in the fiber diameter direction was counted.
(7) The number of occurrences of fiber diameter fluctuations per million meter was calculated.

B. Fineness (dtex)

A 500 m portion of the monofilament was skeined, and the value calculated by multiplying the mass (g) of the skein by 20 was adopted as its fineness.

C. Residual elongation percentage (%), strength (cN/dtex), strength (modulus) (cN/dtex) at 5% elongation

Measurements were taken using Tensilon UCT-100 manufactured by Orientec according to JIS L1013 (1999).

D. Boiling water shrinkage rate (%)

(1) A 10-turn skein was formed using a skein machine with a circumference of 1 m.
(2) One end of the skein was hung on a hook and a weight with a load of 4.44 g/dtex was hung on the other end, followed by measuring the length of the untreated skein.
(3) The skein was immersed in boiling water for 15 minutes and then immersed in cold water for 1 minute.

(4) After air-drying, the step (2) was carried out to measure the length of the treated skein.
(5) The fiber shrinkage rate (%) was calculated by the following equation:

$$\text{Fiber shrinkage rate (\%)} = (1 - \text{length of treated skein / length of untreated skein}) \times 100.$$

E. Intrinsic viscosity of polyester

Regarding the term $\eta r$ in the definition formula, 0.8 g of a specimen was dissolved in 10 mL of o-chlorophenol (hereinafter abbreviated as OCP) with a purity of 98% maintained at 25°C and the relative viscosity $\eta r$ was determined at a temperature of 25°C using an Ostwald viscometer and the formula given below, followed by calculating the intrinsic viscosity (IV):

$$\eta r = \eta/\eta_0 = (t \times d) / (t_0 \times d_0)$$

$$\text{Intrinsic viscosity (IV)} = 0.0242\eta_r + 0.2634$$

Here, $\eta$ is the viscosity of the polymer solution; $\eta_0$ is the viscosity of the OCP; t is the drop time (seconds) of the solution; d is the density (g/cm$^3$) of the solution; $t_0$ is the drop time (seconds) of the OCP; and $d_0$ is the density (g/cm$^3$) of the OCP.

F. Number of weft threads in the mesh

In order to evaluate the uniformity of the apertures of the monofilament according to the present invention, a mesh was produced according to the procedure described below using a 6 dtex monofilament according to the present invention as warp and using the monofilament prepared in each example or comparative example of the present invention as weft and evaluated.

(1) A mesh having a width of 2.0 m, a length of 50 m, and a warp and weft density of 222 threads/cm is woven using a loom (P7100, manufactured by Sulzer).
(2) In the resulting mesh, marks each having a length of 5 cm and a width of 5 cm are made at three different positions that were on different warp and weft threads.
(3) Each marked area is observed at a magnification of 100 times or more under an optical microscope, and the number of weft threads is counted, followed by calculating the number of weft threads per centimeter.
(4) For the number of weft threads per centimeter measured at three positions, the difference (maximum value - minimum value) is determined. The difference (maximum value - minimum value) decreases with a decreasing number of fiber diameter fluctuations and with a decreasing fluctuation range. It is preferable for the difference (maximum value - minimum value) to be 2.7 or less.

(Example 1)

A PET material having an intrinsic viscosity of 0.78 adopted for the core and a PET material having an intrinsic viscosity of 0.51 adopted for the sheath were melted separately at a temperature of 295°C in extruders and then introduced into a melt-spinning pack at a polymer temperature of 283°C through a metering pump where the flows were controlled in such a matter that the core-sheath ratio was maintained at core:sheath = 80:20. The melt-spinning pack had a filtering portion with a diameter of 45.0 mm and contained a nonwoven fabric filter, a perforated plate, and a spinneret. The perforated plate had perforated-plate inlet holes arranged along three circles: the circle closest to the center, called the first circle, had a diameter of 9 mm and had 8 inlet holes thereon; the second circle had a diameter of 17 mm and had 8 inlet holes thereon; and the third circle had a diameter of 33 mm and had 16 inlet holes thereon. All outlets were arranged along one circle that had a diameter of 27 mm: a total of 32 outlets were arranged in the order of an outlet leading to the first inlet circle, an outlet leading to the third inlet circle, an outlet leading to the second inlet circle, and an outlet leading to the third inlet circle. In this way, outlets are located so as to allow through-holes to be formed in such a manner that the polymer materials reaching mutually adjacent outlets come from inlets on different circles. Here, the through-holes had a diameter of 1.8 mm and the perforated plate was made of SUS420J2. The polymer reservoir on the spinneret had a diameter of 28 mm and a thickness of 1.5 mm, and the spinneret was of a generally known composite type. The polymer materials were allowed to flow in such a manner that they would form a core-sheath type thread and they were discharged through a discharge hole with a diameter of 0.49 mm. The monofilament discharged from the spinneret was heated actively and its temperature was maintained so that the atmospheric temperature directly below the spinneret was controlled at 300°C. Then, it was cooled by a yarn cooling blower and taken up on an unheated first godet roller at a rate of 735 m/min while applying a spinning oil agent. This undrawn thread had a glass transition temperature of 80°C. The thread was sent to the first hot roll heated at a temperature of 90°C at a rate of 742 m/min without winding, sent to the second hot roll heated at a temperature of 90°C at a rate of 2,385 m/min and sent to the third hot roll heated at a temperature of 130°C at a rate of 3,373 m/min, drawing and heat-setting. In this step, the drawing ratio was 4.59. In addition, it was sent to two unheated godet rollers having a surface roughness of 0.8 S at a rate of 3,375 m/min and wound on a package while controlling the spindle rotation speed so as to control the wind-up tension at 0.425 g/dtex to provide a polyester monofilament of 3.0 dtex. As seen from Table 1, which summarizes major characteristics of this polyester monofilament, it had excellent fiber diameter uniformity and thread properties for use in superfine high-mesh filters and served to produce a mesh having high uniformity in weft thread density.

(Examples 2 to 4)

Except for adopting a discharge rate and draw ratio different from those in Example 1, a polyester monofilament having a fineness of 4.0 to 6.0 dtex was produced. As seen from Table 1, which summarizes major characteristics of each resulting polyester monofilament, it had excellent fiber diameter uniformity and thread properties and served to produce a mesh having high uniformity in weft thread density.

[Table 1]

| | | | Example 1 | Example 2 | Example 3 | Example 4 |
|---|---|---|---|---|---|---|
| Discharge rate | Core | g/hole-min | 0.74 | 1.09 | 1.31 | 1.60 |
| | Sheath | g/hole-min | 0.19 | 0.27 | 0.33 | 0.40 |
| | Total | g/hole-min | 0.93 | 1.36 | 1.63 | 2.00 |
| Diameter of polymer reservoir | | mm | 28 | 28 | 28 | 28 |
| Arrangement diameter of perforated plate outlets | | mm | 27 | 27 | 27 | 27 |
| Difference between diameter of polymer reservoir and arrangement diameter of outlets | | mm | 1 | 1 | 1 | 1 |
| Spinning rate | | m/min | 735 | 735 | 735 | 735 |
| Draw ratio | | ratio | 4.59 | 4.59 | 4.59 | 4.50 |
| Cross-sectional core-sheath ratio in monofilament | core | | 80 | 80 | 80 | 80 |
| | sheath | | 20 | 20 | 20 | 20 |
| Fineness | | dtex | 3.0 | 4.0 | 4.8 | 6.0 |
| Residual elongation percentage | | % | 30 | 32 | 33 | 40 |
| Frequency of fiber diameter fluctuations of 1.0 $\mu$m or more in fiber diameter direction | | number/ 7.68 mil. m | 4 | 3 | 2 | 1 |
| | | number/1 mil. m | 0.5 | 0.4 | 0.3 | 0.1 |
| Thread length in the portion where fluctuation occurred | | m | 220 | 103 | 110 | 72 |

(continued)

| Fiber diameter fluctuations | | | Example 1 | Example 2 | Example 3 | Example 4 |
|---|---|---|---|---|---|---|
| | (positive direction) | | | | | |
| | Maximum fluctuation range | μm | 1.5 | 0.5 | 0.5 | 0.3 |
| | Thread length in the portion where maximum fluctuation occurred | m | 25 | 36 | 24 | 24 |
| | Maximum fluctuation range / thread length in the portion where maximum fluctuation occurred | μm/m | 0.06 | 0.01 | 0.02 | 0.01 |
| | (negative direction) | | | | | |
| | Maximum fluctuation range | μm | 1.8 | 1.5 | 1.1 | 1.0 |
| | Thread length in the portion where maximum fluctuation occurred | m | 28 | 48 | 48 | 48 |
| | Maximum fluctuation range / thread length in the portion where maximum fluctuation occurred | μm/m | 0.06 | 0.03 | 0.02 | 0.02 |
| Strength | | cN/dtex | 5.8 | 5.8 | 5.7 | 5.3 |
| Strength at 5% elongation | | cN/dtex | 3.5 | 3.4 | 3.2 | 3.4 |
| Boiling water shrinkage rate | | % | 9.2 | 8.9 | 8.7 | 7.5 |
| Number of weft threads 1 | | number/cm | 222.1 | 222.1 | 222.1 | 222.2 |
| Number of weft threads 2 | | number/cm | 222.9 | 222.9 | 222.3 | 222.2 |
| Number of weft threads 3 | | number/cm | 223.5 | 223.1 | 222.9 | 222.7 |
| Difference in number of weft threads | | number/cm | 1.4 | 1.0 | 0.8 | 0.5 |

(Examples 5 to 8 and Comparative examples 1 and 2)

Except for adopting an altered core-sheath ratio for polyester monofilament, a monofilament was produced in the same manner as in Example 2. Characteristics of the resulting polyester monofilament are shown in Table 2.

[Table 2]

| | | | Example 5 | Example 6 | Example 7 | Example 8 | Comparative example 1 | Comparative example 2 |
|---|---|---|---|---|---|---|---|---|
| Discharge rate | Core | g/hole-min | 1.29 | 1.23 | 0.95 | 0.82 | 1.35 | 0.68 |
| | Sheath | g/hole-min | 0.07 | 0.14 | 0.41 | 0.54 | 0.01 | 0.68 |
| | Total | g/hole-min | 1.36 | 1.36 | 1.36 | 1.36 | 1.36 | 1.36 |
| Diameter of polymer reservoir | | mm | 28 | 28 | 28 | 28 | 28 | 28 |
| Arrangement diameter of perforated plate outlets | | mm | 27 | 27 | 27 | 27 | 27 | 27 |
| Difference between diameter of polymer reservoir and arrangement diameter of outlets | | mm | 1 | 1 | 1 | 1 | 1 | 1 |
| Spinning rate | | m/min | 735 | 735 | 735 | 735 | 735 | 735 |
| Draw ratio | | ratio | 4.59 | 4.59 | 4.59 | 4.59 | 4.59 | 4.59 |
| Cross-sectional core-sheath ratio in monofilament | core | | 95 | 90 | 70 | 60 | 99 | 50 |
| | sheath | | 5 | 10 | 30 | 40 | 1 | 50 |
| Fineness | | dtex | 4.0 | 4.0 | 4.0 | 4.0 | 4.0 | 4.0 |
| Residual elongation percentage | | % | 30 | 31 | 42 | 45 | 25 | 50 |
| Frequency of fiber diameter fluctuations of 1.0 $\mu$m or more in fiber diameter direction | number/ 7.68 mil. m | | 5 | 3 | 3 | 4 | 16 | 10 |
| | number/1 mil. m | | 0.7 | 0.4 | 0.4 | 0.5 | 2.1 | 1.3 |
| Thread length in the portion where fluctuation occurred | | m | 236 | 148 | 144 | 192 | 260 | 454 |

(continued)

| | | | Example 5 | Example 6 | Example 7 | Example 8 | Comparative example 1 | Comparative example 2 |
|---|---|---|---|---|---|---|---|---|
| Fiber diameter fluctuations | (positive direction) | | | | | | | |
| | Maximum fluctuation range | $\mu$m | 1.5 | 1.0 | 0.9 | 1.3 | 2.0 | 2.1 |
| | Thread length in the portion where maximum fluctuation occurred | m | 29 | 42 | 33 | 32 | 21 | 30 |
| | Maximum fluctuation range / thread length in the portion where maximum fluctuation occurred | $\mu$m/m | 0.05 | 0.02 | 0.03 | 0.04 | 0.10 | 0.07 |
| | (negative direction) | | | | | | | |
| | Maximum fluctuation range | $\mu$m | 1.5 | 1.5 | 1.0 | 1.2 | 2.5 | 1.8 |
| | Thread length in the portion where maximum fluctuation occurred | m | 14 | 17 | 23 | 30 | 16 | 22 |
| | Maximum fluctuation range / thread length in the portion where maximum fluctuation occurred | $\mu$m/m | 0.11 | 0.09 | 0.04 | 0.04 | 0.16 | 0.08 |
| Strength | | cN/dtex | 6.0 | 5.9 | 5.4 | 5.0 | 6.2 | 4.8 |
| Strength at 5% elongation | | cN/dtex | 3.8 | 3.4 | 3.0 | 2.7 | 3.9 | 2.5 |
| Boiling water shrinkage rate | | % | 7.4 | 8.0 | 9.5 | 10 | 6.9 | 11 |
| Number of weft threads 1 | | number/cm | 222.1 | 222.1 | 222.1 | 222.3 | 221.6 | 221.3 |
| Number of weft threads 2 | | number/cm | 223 | 222.7 | 222.3 | 222.7 | 222 | 222.7 |
| Number of weft threads 3 | | number/cm | 223.6 | 223.1 | 223.1 | 223.5 | 224.5 | 224.8 |
| Difference in number of weft threads | | number/cm | 1.5 | 1.0 | 1.0 | 1.2 | 2.9 | 3.5 |

(Examples 9 and 10 and Comparative example 3)

Except that the perforated plate used had a circle with an altered diameter along which outlets were arranged as compared with Example 2, a monofilament was produced in the same manner as in Example 2. Characteristics of the resulting polyester monofilament are shown in Table 3.

[Table 3]

| | | | Example 9 | Example 10 | Comparative example 3 |
|---|---|---|---|---|---|
| Discharge rate | Core | g/hole · min | 1.09 | 1.09 | 1.09 |
| | Sheath | g/hole · min | 0.27 | 0.27 | 0.27 |
| | Total | g/hole · min | 1.36 | 1.36 | 1.36 |
| Diameter of polymer reservoir | | mm | 28 | 28 | 28 |
| Arrangement diameter of perforated plate outlets | | mm | 26.2 | 26.5 | 26.0 |
| Difference between diameter of polymer reservoir and arrangement diameter of outlets | | mm | 1.8 | 1.5 | 2.0 |
| Spinning rate | | m/min | 735 | 735 | 735 |
| Draw ratio | | ratio | 4.59 | 4.59 | 4.59 |
| Cross-sectional core-sheath ratio in monofilament | core | | 80 | 80 | 80 |
| | sheath | | 20 | 20 | 20 |
| Fineness | | dtex | 4.0 | 4.0 | 4.0 |
| Residual elongation percentage | | % | 32 | 32 | 32 |
| Frequency of fiber diameter fluctuations of 1.0 $\mu$m or more in fiber diameter direction | | number/7.68 mil. m | 8 | 6 | 16 |
| | | number/1 mil. m | 1.0 | 0.8 | 2.1 |
| Thread length in the portion where fluctuation occurred | | m | 250 | 200 | 270 |
| Fiber diameter fluctuations | (positive direction) | | | | |
| | Maximum fluctuation range | $\mu$m | 1.9 | 1.5 | 2.2 |
| | Thread length in the portion where maximum fluctuation occurred | m | 26 | 24 | 33 |
| | Maximum fluctuation range / thread length in the portion where maximum fluctuation occurred | $\mu$m/m | 0.07 | 0.06 | 0.07 |
| | (negative direction) | | | | |
| | Maximum fluctuation range | $\mu$m | 1.3 | 0.5 | 2.5 |
| | Thread length in the portion where maximum fluctuation occurred | m | 45 | 31 | 19 |
| | Maximum fluctuation range / thread length in the portion where maximum fluctuation occurred | $\mu$m/m | 0.03 | 0.02 | 0.13 |
| Strength | | cN/dtex | 5.8 | 5.8 | 5.8 |
| Strength at 5% elongation | | cN/dtex | 3.4 | 3.4 | 3.4 |
| Boiling water shrinkage rate | | % | 8.9 | 8.9 | 8.9 |
| Number of weft threads 1 | | number/cm | 222.1 | 222.1 | 221.4 |

(continued)

|  |  | Example 9 | Example 10 | Comparative example 3 |
|---|---|---|---|---|
| Number of weft threads 2 | number/cm | 222.2 | 222.9 | 224.2 |
| Number of weft threads 3 | number/cm | 224.8 | 223.7 | 225.00 |
| Difference in number of weft threads | number/cm | 2.7 | 1.6 | 3.6 |

**Claims**

1. A core-sheath type composite polyester monofilament for superfine high-mesh filters **characterized by** meeting the requirements A to D specified blow:

   A. the frequency of fiber diameter fluctuations of 1.0 $\mu$m or more in the fiber diameter direction is 1.0 or less in every 1,000,000 m in the fiber length direction of the monofilament measured with the method defined in the description,
   B. the monofilament has a fineness of 3.0 to 6.0 dtex,
   C. the monofilament has a residual elongation percentage of 30 to 45%, and
   D. the monofilament has a core-to-sheath cross-sectional area ratio in the range of 60:40 to 95:5 (core:sheath).

2. The core-sheath type composite polyester monofilament for superfine high-mesh filters as set forth in claim 1, wherein the requirements E to G specified blow are met:

   E. the monofilament has a strength of 5.0 to 6.0 cN/dtex,
   F. the monofilament has a strength at 5% elongation is 2.7 to 3.8 cN/dtex, and
   G. the monofilament has a boiling water shrinkage rate of 7.0 to 10.0%.

3. The core-sheath type composite polyester monofilament for superfine high-mesh filters as set forth in either claim 1 or 2, wherein the high-viscosity polyester in the core has an intrinsic viscosity of 0.70 to 0.85; the low-viscosity polyester in the sheath has an intrinsic viscosity of 0.40 to 0.55; and the core polyester component and the sheath polyester component has an intrinsic viscosity difference of 0.20 to 0.45.

4. A production method for a core-sheath type composite polyester monofilament for superfine high-mesh filters as set forth in any one of claims 1 to 3, having a melt spinning pack containing

   - a filter layer,
   - a filter,
   - a perforated plate with a polymer inlet portion and a polymer outlet portion, the polymer outlet portion comprising a circular arrangement of polymer outlets, the circular arrangement having a first diameter,
   - a polymer reservoir, and
   - a spinneret,
   wherein the filter layer, the filter, the perforated plate, the polymer reservoir, and the spinneret are arranged in this order,
   wherein the polymer reservoir has, in the perforated plate outlet portion, a second diameter, and
   wherein the first diameter and the second diameter have a difference of less than 2 mm.

**Patentansprüche**

1. Ein Verbundstoff-Polyestermonofilament vom Kern-Mantel-Typ für superfeine engmaschige Filter, **dadurch gekennzeichnet, dass** es die unten angegebenen Anforderungen A bis D erfüllt:

   A. Die Frequenz von Faserdurchmesserschwankungen von 1,0 $\mu$m oder mehr in Richtung des Faserdurchmessers beträgt 1,0 oder weniger pro 1.000.000 m in Richtung der Faserlänge des Monofilaments, gemessen mit dem in der Beschreibung definierten Verfahren,

B. das Monofilament weist eine Feinheit von 3,0 bis 6,0 dtex auf,

C. das Monofilament weist eine prozentuale Restdehnung von 30 bis 45 % auf, und

D. das Monofilament weist ein Querschnittsflächenverhältnis von Kern zu Mantel im Bereich von 60:40 bis 95:5 (Kern: Mantel) auf.

2. Das Verbundstoff-Polyestermonofilament vom Kern-Mantel-Typ für superfeine engmaschige Filter gemäß Anspruch 1, wobei die unten angegebenen Anforderungen E bis G erfüllt sind:

E. das Monofilament weist eine Festigkeit von 5,0 bis 6,0 cN/dtex auf,

F. das Monofilament weist eine Festigkeit bei 5 % Dehnung von 2,7 bis 3,8 cN/dtex auf, und

G. das Monofilament weist eine Siedewasser-Schrumpfungsrate von 7,0 bis 10,0 % auf.

3. Das Verbundstoff-Polyestermonofilament vom Kern-Mantel-Typ für superfeine engmaschige Filter gemäß Anspruch 1 oder 2, wobei der hochviskose Polyester im Kern eine intrinsische Viskosität von 0,70 bis 0,85 aufweist; wobei der niedrigviskose Polyester im Mantel eine intrinsische Viskosität von 0,40 bis 0,55 aufweist; und wobei die Kernpolyesterkomponente und die Mantelpolyesterkomponente eine Differenz der intrinsischen Viskosität von 0,20 bis 0,45 aufweisen.

4. Ein Verfahren zur Herstellung eines Verbundstoff-Polyestermonofilament vom Kern-Mantel-Typs für superfeine engmaschige Filter gemäß einem der Ansprüche 1 bis 3 mit einem Schmelzspinnpaket, das enthält

- eine Filterschicht,
- ein Filter,
- eine perforierte Platte mit einem Polymereinlassabschnitt und einem Polymerauslassabschnitt, wobei der Polymerauslassabschnitt eine kreisförmige Anordnung von Polymerauslässen umfasst, wobei die kreisförmige Anordnung einen ersten Durchmesser hat,
- ein Polymerreservoir, und
- eine Spinndüse,
wobei die Filterschicht, das Filter, die perforierte Platte, das Polymerreservoir und die Spinndüse in dieser Reihenfolge angeordnet sind,
wobei das Polymerreservoir im perforierten Plattenauslassabschnitt einen zweiten Durchmesser aufweist, und
wobei der erste Durchmesser und der zweite Durchmesser eine Differenz von weniger als 2 mm aufweisen.

## Revendications

1. Un monofilament de polyester composite de type âme-gaine pour filtre à maille élevée superfin, **caractérisé en ce qu'**il satisfait les conditions A à D spécifiées ci-dessous :

A. la fréquence des fluctuations du diamètre des fibres de 1,0 $\mu$m ou plus dans la direction du diamètre des fibres est de 1,0 ou moins tous les 1 000 000 m dans la direction de la longueur des fibres du monofilament mesurée selon la méthode définie dans la description,

B. le monofilament a une finesse de 3,0 à 6,0 dtex,

C. le monofilament a un pourcentage d'allongement résiduel de 30 à 45%, et

D. le monofilament a un ratio de surface de section transversale âme/gaine compris entre 60:40 et 95:5 (âme/gaine).

2. Un monofilament de polyester composite de type âme-gaine pour filtre à maille élevée superfin selon la revendication 1, dans lequel les conditions E à G spécifiées ci-dessous sont satisfaites :

E. le monofilament a une résistance de 5,0 à 6,0 cN/dtex,

F. le monofilament a une résistance à 5 % d'allongement de 2,7 à 3,8 cN/dtex, et

G. le monofilament a un taux de rétrécissement à l'eau d'ébullition de 7,0 à 10,0 %.

3. Le monofilament de polyester composite de type âme-gaine pour filtre à maille élevée superfin selon la revendication 1 ou 2, dans lequel le polyester à haute viscosité de l'âme a une viscosité intrinsèque de 0,70 à 0,85 ; dans lequel le polyester à faible viscosité de la gaine a une viscosité intrinsèque de 0,40 à 0,55 ; et le composant de polyester de l'âme et le composant de polyester de la gaine ont une différence de viscosité intrinsèque de 0,20 à 0,45.

4. Procédé de fabrication d'un monofilament de polyester composite de type âme-gaine pour filtre à maille élevée superfin selon l'une quelconque des revendications 1 à 3, utilisant un paquet de filage par fusion contenant

- une couche filtrante,
- un filtre,
- une plaque perforée avec une partie d'entrée de polymère et une partie de sortie de polymère, la partie de sortie de polymère comprenant un arrangement circulaire de sorties de polymère, l'arrangement circulaire ayant un premier diamètre,
- un réservoir de polymère, et
- une filière,

dans lequel la couche filtrante, le filtre, la plaque perforée, le réservoir de polymère et la filière sont disposés dans cet ordre,

dans lequel le réservoir de polymère a, dans la partie de sortie de la plaque perforée, un deuxième diamètre, et

dans lequel le premier diamètre et le second diamètre ont une différence inférieure à 2 mm.

Figure 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010180484 A
- JP 2017066560 A
- JP 2011001657 A
- JP 2012117196 A